Europäisches Patentamt

European Patent Office

Office européen des brevets

(11) Publication number: 0 621 482 A1

# EUROPEAN PATENT APPLICATION

(21) Application number: 94106096.4

(22) Date of filing: 20.04.94

(51) Int. Cl.5: G01P 3/44, G01P 7/00,
G01P 15/08

(30) Priority: 22.04.93 US 52141

(43) Date of publication of application:
26.10.94 Bulletin 94/43

(84) Designated Contracting States:
DE FR GB IT SE

(71) Applicant: Hughes Aircraft Company
7200 Hughes Terrace
P.O. Box 45066
Los Angeles, California 90045-0066 (US)

(72) Inventor: Olney, Ross D.
23400 Candlewood Way
West Hills, CA 91307 (US)
Inventor: Romagnoli, Robert J.
8011-1 Canby Street
Reseda, CA 91355 (US)

(74) Representative: Otten, Hajo, Dr.-Ing. et al
Witte, Weller, Gahlert & Otten
Patentanwälte
Augustenstrasse 14
D-70178 Stuttgart (DE)

(54) Rotation sensor using linear accelerometers.

(57) A rotation sensor (10) comprises first and second linear accelerometers (14, 16) which are spaced from each other by a predetermined distance along a rotatable linear axis (18) and have first and second sensing axes (20, 22) which are parallel to each other. Said accelerometers (14, 16) sense first and second linear accelerations, respectively. A computer (24) computes rotating of said linear axis (18) as a predetermined function of said first and second linear accelerations and said predetermined distance.

FIG. 1.

## BACKGROUND OF THE INVENTION

### Field of the Invention

The present invention generally relates to sensors for sensing the rotation rate of motor vehicles and other objects, and more specifically to a rotation sensor using linear accelerometers which senses the rotation of an object in a manner which is independent of the location of the axis about which the object rotates, the radius of rotation and translational movement of the object.

### Description of the Related Art

Rotation sensors are required to provide inputs to advanced mechanical control systems such as four-wheel steering, anti-lock braking, electronic shifting, and traction control systems for motor vehicles. The parameter which is to be sensed is the rotation rate, or angular velocity of the vehicle body relative to a fixed frame of reference, in this case the earth.

Known rotation sensors such as mechanical gyroscopes, ring lasers, fiber-optic ring interferometers, and variations of liquid-suspended floating rotors are too expensive for automotive applications.

U.S. Patent No. 5,120,951, entitled "OPTOELECTRONIC MOTION AND FLUID FLOW SENSOR WITH RESILIENT MEMBER DEFLECTED BY FLUID FLOW", issued June 9, 1992 to J. Small, discloses a rotation sensor including a light source and a photosensor which are disposed on opposite sides of a circular fluid passageway.

A resilient member is fixedly supported at one end or edge and is entrained in the fluid for varying the amount of light incident on the photosensor from the light source as a function of the amount of deflection of the resilient member caused by motion of the fluid in the passageway.

This prior art rotation sensor is inexpensive and provides good performance in numerous applications. However, the fluid is urged to accelerate to and rotate at the same speed as the sensor body due to viscous coupling between the body and the fluid. This causes the output signal of the sensor to decay with time, making it difficult to sense slowly changing rotation rates.

Linear accelerometers are commercially available at low cost, and produce output signals which do not decay with time. It is possible to use a linear accelerometer to sense angular velocity if the axis and radius of rotation are fixed and known, since the centripetal acceleration which can be sensed by a linear accelerometer is equal to the product of the radius of rotation and the square of the angular velocity.

However, the axis about which a motor vehicle can rotate and the radius of rotation vary widely depending on actual driving conditions. The axis will be located at the center of a curve and the radius will be equal to the radius of the curve if a vehicle is driven around the curve with good traction. However, the axis and radius of rotation vary from one curve to another. In a low traction situation which is required to be corrected by, for example, an anti-lock braking system, the axis and radius of rotation can vary widely from one instant to the next.

Linear accelerometers are also effected by translational movement of the vehicle which is superimposed on the rotational movement. For these reasons, the rotation of a motor vehicle under actual driving conditions cannot be sensed using a single linear accelerometer.

## SUMMARY OF THE INVENTION

A rotation sensor embodying the present invention includes two linear accelerometers which are spaced from each other by a fixed distance along a linear axis which is integrally rotatable with the body of a motor vehicle or other object whose rotation is to be sensed.

In one embodiment of the invention, the accelerometers have sensing axes which are collinear with the linear axis. A computer computes the rotation of the vehicle as magnitude of angular velocity in accordance with the square root of the difference between linear accelerations sensed by the sensors divided by the distance between them. The sign or direction of rotation is sensed by a magnetic compass.

In a second embodiment, the sensing axes are perpendicular to the linear axis, and the computer computes the rotation of the vehicle as angular acceleration in accordance with the difference between the linear accelerations divided by the distance between them. The angular acceleration is integrated to obtain angular velocity which includes the sign or direction of rotation.

The magnitude of angular velocity can be computed more accurately in actual practice using the square root function than by integration. For this reason, the two basic embodiments can be combined to produce a sensor including four accelerometers in which the magnitude of angular velocity is computed from the outputs of two collinear accelerometers, and the sign or direction of the angular velocity is provided by integrating the angular acceleration computed from the outputs of two accelerometers aligned perpendicular to their line of separation.

The sensed rotation is independent of the location of the axis about which the vehicle rotates, and the radius of rotation.

The accelerometers produce equal outputs in response to translational movement of the vehicle. Since the rotation is computed as a function of the difference between the outputs of the accelerometers, the net effect of translational movement of the vehicle is zero and the sensor output reflects only rotational movement.

In addition, the accelerometers produce output signals which do not decay with time. This enables continuous and accurate sensing of slowly changing, as well as rapidly changing rotation rates under actual driving conditions.

Linear accelerometers suitable for practicing the invention are commercially available as off-the-shelf components at low cost, enabling the present sensor to be economically utilized in advanced mechanical control systems such as four-wheel steering, anti-lock braking, electronic shifting, and traction control systems for motor vehicles.

These and other features and advantages of the present invention will be apparent to those skilled in the art from the following detailed description, taken together with the accompanying drawings, in which like reference numerals refer to like parts.

## DESCRIPTION OF THE DRAWINGS

FIG. 1 is a simplified diagram illustrating a rotation sensor embodying the present invention as mounted on a motor vehicle;

FIG. 2 is a simplified diagram illustrating a linear accelerometer of the present rotation sensor;

FIGs. 3 and 4 are diagrams illustrating alternative arrangements of accelerometers of the sensor of FIG. 1;

FIG. 5 is a diagram illustrating the geometry of the sensor with the accelerometers arranged as in FIG. 3;

FIG. 6 is a diagram illustrating the geometry of the sensor with the accelerometers arranged as in FIG. 4;

FIGs. 7 and 8 are diagrams illustrating alternative orientations of the accelerometers of the rotation sensor in the vehicle;

FIG. 9 is a diagram illustrating a sensor arrangement including four accelerometers; and

FIG. 10 is a block diagram illustrating a computer for computing angular velocity in response to outputs of the four accelerometers of FIG. 9.

## DETAILED DESCRIPTION OF THE INVENTION

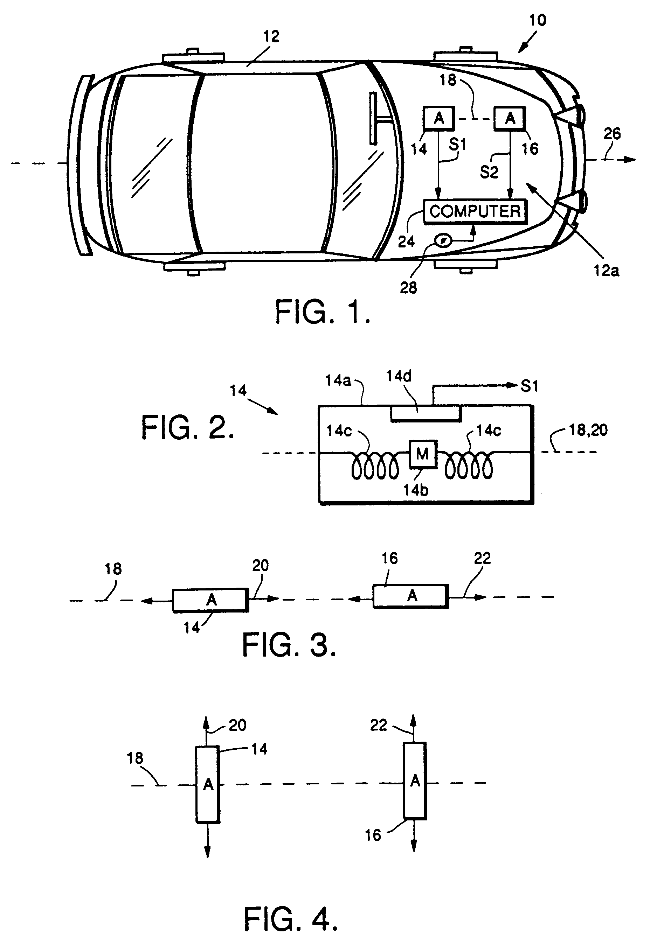

FIGs. 1 and 2 illustrate a rotation sensor 10 embodying the present invention for sensing the rotation of an object such as the body of a motor vehicle 12. The sensor 10 includes first and second linear accelerometers 14 and 16 which are mounted for integral movement with the vehicle 12.

The accelerometers 14 and 16 are each capable of sensing positive and negative acceleration, and are spaced from each other along a linear axis 18 by a distance Δ.

The accelerometers 14 and 16 have linear acceleration sensing axes 20 and 22 respectively which are parallel to each other. The axes 20 and 22 can be collinear with the axis 18 as illustrated in FIG. 3, or perpendicular to the axis 18 as illustrated in FIG. 4.

The sensors 14 and 16 produce first and second electrical signals S1 and S2 corresponding to first and second linear accelerations sensed thereby respectively. Linear accelerometers 14 and 16 suitable for practicing the invention are commercially available as low cost, off-the-shelf components from a number of manufacturers.

The signals S1 and S2 are applied to a computer 24 which computes the rotation rate of the vehicle 12 as a predetermined function of the first and second linear accelerations sensed by the accelerometers 14 and 16 as represented by the electrical signals S1 and S2 respectively and the distance Δ.

The computer 24 can be a microcomputer which runs under the control of a software program, or can be a dedicated hardware unit. The computed rotation is applied as an input to a four-wheel steering, anti-lock braking, electronic shifting, traction control and/or other system (not shown).

The accelerometers 14 and 16 and computer 24 are illustrated as being mounted inside an engine compartment 12a in the front of the vehicle 12, with the axis 18 being parallel to a longitudinal axis or intended forward direction of the vehicle 12 as indicated by 26. However, the invention is not so limited, and the accelerometers 14 and 16 and computer 24 can be mounted at any suitable locations on or in the vehicle 12.

The accelerometers 14 and 16 are preferably identical, with the accelerometer 14 being illustrated in FIG. 2 in simplified form. The accelerometer 14 includes a housing 14a in which an inertial mass 14b is suspended by return springs 14c. An electromagnetic or other type of pickup 14d is fixedly mounted adjacent to the mass 14b and generates the signal S1 as a function of the position of the mass 14b.

The accelerometer 14 is responsive to components of acceleration which are parallel to the sensing axis 20. If, for example, the vehicle 12 and thereby the housing 14a are moved rightwardly as viewed in FIG. 1 (positive acceleration), the mass 14b will attempt to remain stationary, but will be pulled rightwardly by the springs 14c and will lag behind the pickup 14d by a distance corresponding to the acceleration and the stiffness of the springs 14c.

If the vehicle 12 and housing 14a are decelerated (negative acceleration), the mass 14b will attempt to maintain its previous velocity, but will be pulled leftwardly by the springs 14c and will lead ahead of the pickup 14d by a distance corresponding to the acceleration and the stiffness of the springs 14c.

The inertial mass 14b and return springs 14c of the accelerometer 14 constitute a sensing element. In a first embodiment of the invention in which the accelerometers 14 and 16 and thereby their sensing elements are identical and the sensing axes 20 and 22 are collinear with the axis 18 as illustrated in FIG. 3, the rotation of the vehicle 12 can be expressed in terms of magnitude of angular velocity $|\omega|$ as

$$|\omega| = \sqrt{\frac{|a1 - a2|}{\Delta}}$$

where a1 and a2 are the first and second sensed linear accelerations as represented by the signals S1 and S2 respectively.

Since the magnitude of angular velocity $|\omega|$ is obtained by taking a square root, the sign or sense of the angular velocity (direction of rotation) is indeterminate. For this reason, a magnetic compass 28 or other device is mounted in the engine compartment 12a for providing an input to the computer 24 which enables determination of the direction of rotation.

The computer 24 periodically senses the output of the magnetic compass 28, which gives the orientation of the axis 18 in degrees or radians, and compares the latest sensed value with the previous sensed value. The direction of rotation is determined by computing whether the latest sensed value is clockwise or counterclockwise relative to the previous sensed value.

In a second embodiment of the invention in which the sensing axes 20 and 22 of the accelerometers 14 and 16 are perpendicular to the axis 18 as illustrated in FIG. 4, the rotation of the vehicle 12 can be expressed in terms of angular acceleration $\alpha$ as

$$\alpha = \frac{a1 - a2}{\Delta}$$

In this case, the angular acceleration $\alpha$ is integrated to produce the angular velocity $\omega$, which includes the sign or direction of rotation, as

$$\omega = \int \alpha dt$$

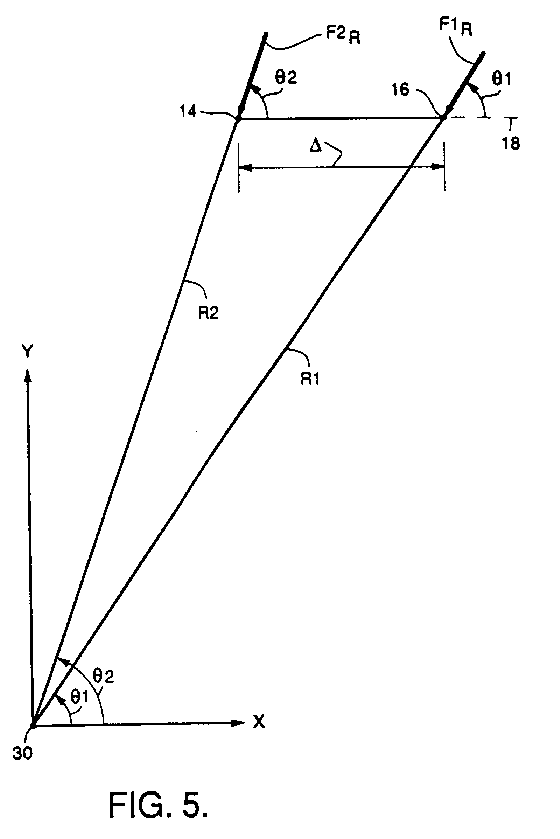

The geometry of the embodiment of FIG. 3 is illustrated in FIG. 5. Only movement in an orthogonal X-Y plane will be considered, with the X-axis being parallel to the linear axis 18. It will be assumed that the vehicle 12 and thereby the axis 18 are rotating clockwise about an axis or point 30. The accelerometers 14 and 16 spaced from the point 30 along radii R1 and R2 which are rotationally displaced by angles $\theta1$ and $\theta2$ from the X-axis respectively.

The accelerometers 14 and 16 produce the signals S1 and S2 in response to inwardly directed radial or centripetal forces $F1_R$ and $F2_R$ which are related to the angular velocity $\omega$ of the axis 18 as $F1_R = mR1\omega^2$ and $F2_R = mR2\omega^2$ respectively, where m is the mass of the sensing element in each of the accelerometers 14 and 16. Centripetal accelerations $a1_R$ and $a2_R$ which correspond to the forces $F1_R$ and $F2_R$ are $a1_R = R1\omega^2$ and $a2_R = R2\omega^2$ respectively.

The subscripts "X" and "Y" will be used to denote components which are parallel to the X- and Y-axes respectively. Since the sensing axes 20 and 22 of the accelerometers 14 and 16 are collinear with the axis 18, the accelerometers 14 and 16 produce the signals S1 and S2 as corresponding to linear components $a1 = a1_{RX} = -a1_R\cos(\theta1)$ and $a2 = a2_{RX} = -a2_R\cos(\theta2)$ of the accelerations $a1_R$ and $a2_R$ which are parallel to the X-axis respectively.

The difference between the accelerations sensed by the accelerometers 14 and 16 is $a1_{RX} - a2_{RX} = -a1_R\cos(\theta1) + a2_R\cos(\theta2) = -\omega^2[R1\cos(\theta1) - R2\cos(\theta2)] = -\omega^2(X1-X2)$, where X1 and X2 are the X-coordinates of the sensors 14 and 16, and $\Delta = X1-X2$. Therefore,

$$|\omega| = \sqrt{\frac{|a1_{RX} - a2_{RX}|}{\Delta}}$$

The magnitude of angular velocity $|\omega|$ is independent of translational movement of the axis 18. Any translational movement parallel to the X-axis in the arrangement of FIGs. 3 and 5 causes the accelerometers 14 and 16 to sense equal accelerations, which are canceled since the computer 24 computes the difference between the output signals S1 and S2 of the accelerometers 14 and 16.

Translational movement parallel to the Y-axis does not affect the accelerometers 14 and 16 since their sensing axes 20 and 22 are perpendicular to the Y-axis. Translational movement which is non-parallel to either of the X-and Y-axes is resolved into X-components which are subtracted out by the computer 24 and Y-components which do not affect the accelerometers 14 and 16.

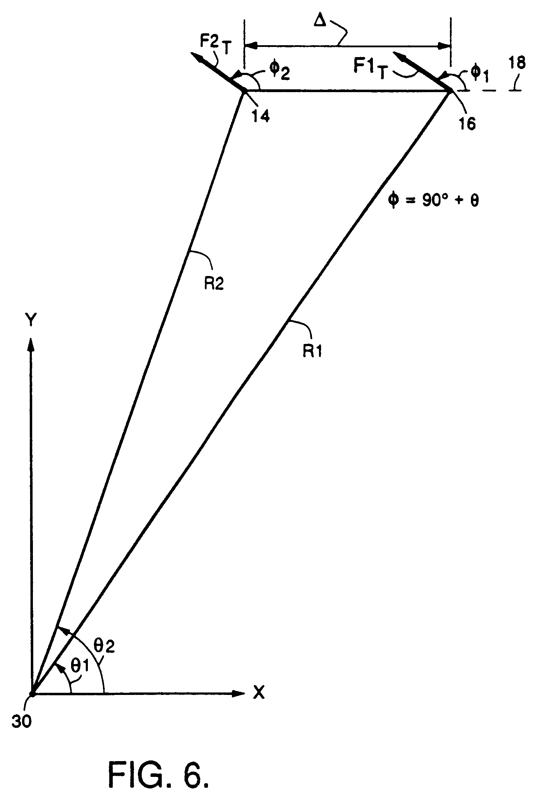

The geometry of the embodiment of FIG. 4 is illustrated in FIG. 6. In this case, the accelerometers 14 and 16 produce the signals S1 and S2 in response to tangential forces $F1_T$ and $F2_T$ which are related to the angular acceleration $\alpha$ of the axis 18 as $F1_T = mR1\alpha$ and $F2_T = mR2\alpha$ respectively. Tangential accelerations $a1_T$ and $a2_T$ which correspond to the forces $F1_T$ and $F2_T$ are $a1_T = R1\alpha$ and $a2_T = R2\alpha$ respectively.

Since the sensing axes 20 and 22 of the accelerometers 14 and 16 are perpendicular to the linear axis 18, the accelerometers 14 and 16 produce the signals S1 and S2 as corresponding to linear components $a1 = a1_{TY} = a1_T\sin(\phi1) = a1_T\cos(\theta1)$ and $a2 = a2_{TY} = a2_T\sin(\phi2) = a2_T\cos(\theta2)$ of the accelerations $a1_T$ and $a2_T$ which are perpendicular to the X-axis respectively, where $\phi = 90° + \theta$.

The angular acceleration $\alpha$ of the axis 18 is related to the tangential acceleration as $\alpha R1 = a1_T$ and $\alpha R2 = a2_T$. Assuming that the accelerometers 14 and 16 are oriented relative to the X-Y coordinate system as illustrated, the difference between the accelerations sensed by the accelerometers 14 and 16 is $a1_{TY}-a2_{TY} = [a1_T\cos(\theta1)-a2_T\cos(\theta2)] = a-[R1\cos(\theta1)-R2\cos(\theta2)] = \alpha(X1-X2)$. Therefore,

$$\alpha = \left[\frac{a1_{TY} - a2_{TY}}{\Delta}\right]$$

The angular velocity $\omega$ can be obtained by integrating the angular velocity $\alpha$, with the result including the sign or direction of rotation as

$$\omega = \int \alpha \, dt$$

The magnitude and sign of the angular acceleration a are independent of translational movement of the axis 18. Any translational movement parallel to the Y-axis in the arrangement of FIGs. 4 and 6 causes the accelerometers 14 and 16 to sense equal accelerations, which are canceled since the computer 24 computes the difference between the output signals S1 and S2 of the accelerometers 14 and 16.

Translational movement parallel to the X-axis does not affect the accelerometers 14 and 16 since their sensing axes 20 and 22 are perpendicular to the X-axis. Translational movement which is non-parallel to either of the X-and Y-axes is resolved into Y-components which are subtracted out by the computer 24 and X-components which do not affect the accelerometers 14 and 16.

The angular velocity $\omega$ which is computed by the computer 24 in accordance with the first and second linear accelerations $\alpha1$ and $\alpha2$ as sensed by the accelerometers 14 and 16 in both embodiments of the sensor 10 as described above is independent of the location of the point 30. For this reason, the location of the axis 18 is not limited within the scope of the invention. The present rotation sensor 10 will therefore provide an accurate rotation rate output under actual driving conditions of a motor vehicle in which the axis and radius of rotation are constantly changing.

In addition, the accelerometers 14 and 16 produce output signals which do not decay with time. This enables continuous and accurate sensing of slowly changing, as well as rapidly changing rotation rates under actual driving conditions.

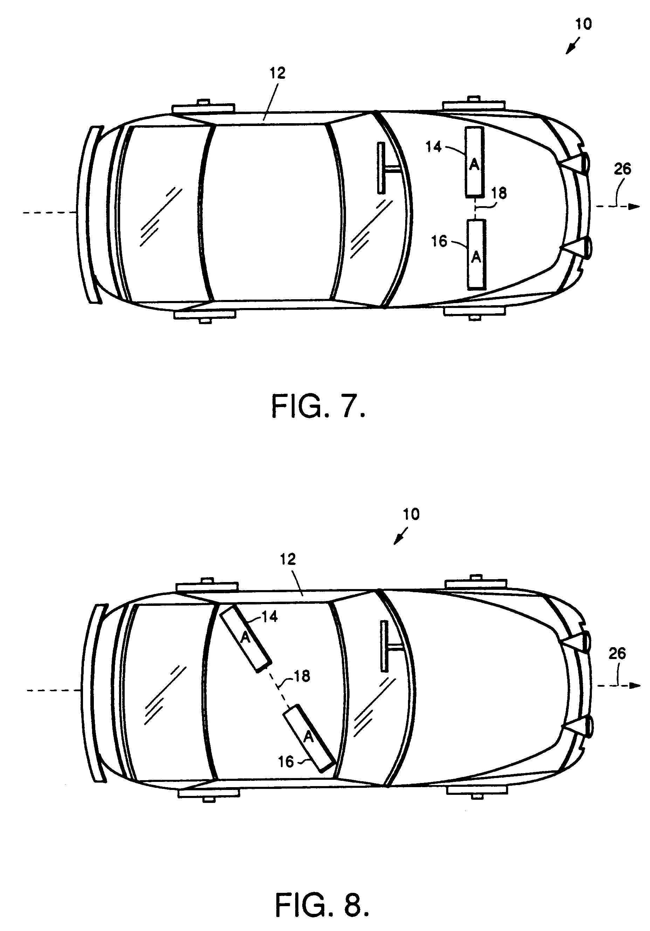

Whereas the axis 18 is illustrated in FIGs. 1 to 3 as being parallel to the longitudinal axis or normal forward direction 26 of the vehicle 12, it can be, for example, perpendicular thereto as illustrated in FIG. 7 or at a non-orthogonal angle thereto as illustrated in FIG. 8.

In actual practice, low cost electronic computing elements suitable for production motor vehicles are capable of extracting square roots with much more accuracy and speed than of performing integration. For this reason, the embodiment of FIGs. 3 and 5 is preferred for obtaining the magnitude of the angular velocity $|\omega|$. However, it is not capable of obtaining the sign or direction of rotation. The embodiment of FIGs. 4 and 6 can compute both the magnitude and direction of rotation, but the accuracy of the magnitude computation is limited due to the necessity of integrating the angular acceleration $\alpha$ to obtain the angular velocity $\omega$.

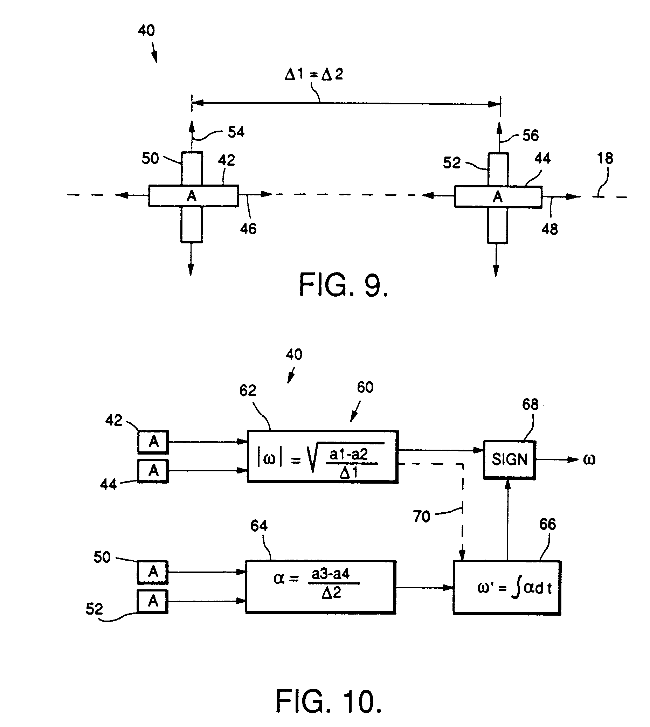

FIGs. 9 and 10 illustrate a third embodiment of a rotation sensor 40 embodying the invention which overcomes the limitations of the two basic embodiments described above. The sensor 40 includes first and second linear accelerometers 42 and 44 having sensing axes 46 and 48 respectively which are collinear with and spaced along the linear axis 18 by a distance $\Delta1$.

The sensor 40 further includes third and fourth linear accelerometers 50 and 52 having sensing axes 54 and 56 respectively which are perpendicular to and spaced along the linear axis 18 by a distance $\Delta2$. The accelerometers 42, 44, 50 and 52 sense linear accelerations a1, a2, a3 and a4 respectively.

As illustrated, the accelerometers 42 and 50 are both located at a first position, and the accelerometers 44 and 52 are both located at a second position along the axis 18, with $\Delta1 = \Delta2$.

However, it is within the scope of the invention, although not specifically illustrated, for $\Delta 1 \neq \Delta 2$, and for the accelerometers 50 and 52 to be disposed along an axis which is parallel to, but not collinear with the axis 18. It is further possible to position the two sets of accelerometers 42,44 and 50,52 along respective axes which are not parallel or perpendicular to each other or to the axis 18.

As illustrated in FIG. 10, the sensor 40 further includes a computer 60 including a first computing element 62 which computes the magnitude of angular velocity $|\omega|$ of the axis 18 as

$$|\omega| = \sqrt{\frac{|a1 - a2|}{\Delta 1}}$$

A second computing element 64 computes the angular acceleration $\alpha$ of the axis 18 as

$$\alpha = \frac{a3 - a4}{\Delta 2}$$

A third computing element 66 computes the angular velocity $\omega'$ of the axis 18 as

$$\omega' = \int \alpha \, dt$$

Since the third computing element 66 computes the angular velocity $\omega'$ using integration, the value of $\omega'$ is not as accurate as the value of $|\omega|$ as computed by the element 62. However, $\omega'$ includes the sign or direction of rotation of the axis 18.

A fourth computing element 68 produces an output value of angular velocity $\omega$ by combining the value of $|\omega|$ with the sign of $\omega'$. The output $\omega$ therefore includes the accuracy of $|\omega|$ and the directional information of $\omega'$. As indicated in broken line 70, is it further within the scope of the invention to apply the value of $|\omega|$ from the element 62 to the element 66 to periodically update or correct the magnitude of $\omega'$ and therefore compensate for errors in integration which accumulate with time.

The computer 40 can be modified within the scope of the invention to reset a constant of integration $C'$ to zero for a short period of time whenever $|\omega| = 0$, where

$$\omega = \int \alpha \, dt + C'$$

While several illustrative embodiments of the invention have been shown and described, numerous variations and alternate embodiments will occur to those skilled in the art, without departing from the spirit and scope of the invention. Accordingly, it is intended that the present invention not be limited solely to the specifically described illustrative embodiments. Various modifications are contemplated and can be made without departing from the spirit and scope of the invention as defined by the appended claims.

**Claims**

1. A rotation sensor (10), comprising:
   first and second linear accelerometers (14, 16) which are spaced from each other by a predetermined distance ($\Delta$) along a rotatable linear axis (18), have first and second sensing axes (20, 22) which are parallel to each other, and sense first and second linear accelerations (a1, a2), respectively; and
   a computer (24) for computing rotation of said linear axis (18) as a predetermined function of said first and second linear accelerations (a1, a2) and said predetermined distance ($\Delta$).

2. The sensor (10) as in claim 1, for sensing rotation of a vehicle (12), characterized in that
   said rotatable linear axis (18) is fixed with respect to the vehicle (12),
   the computer (24) computing rotation of the vehicle (12).

3. The sensor (10) as in claim 2, characterized in that:
   the vehicle (12) has a longitudinal axis (26); and
   said linear axis (18) is parallel to said longitudinal axis (26).

4. The sensor (10) as in claim 1 or 2, characterized in that said first and second sensing axes (20, 22) are collinear with said linear axis (18).

5. The sensor (10) as in claim 4, characterized in that: the first and second linear accelerometers (14, 16) include sensing elements (14b) of substantially equal mass (m); and
   the computer (24) computes said rotation as angular velocity $\omega$, with said predetermined function comprising

$$\omega = \sqrt{\frac{|a1 - a2|}{\Delta}}$$

where a1 is said first linear acceleration, a2 is said second linear acceleration and $\Delta$ is

said predetermined distance.

6. The sensor (10) as in claim 1 or 2, characterized in that said first and second axes (20, 22) are perpendicular to said linear axis (18).

7. The sensor (10) as in claim 6, characterized in that:

the first and second linear accelerometers (14, 16) include sensing elements (14b) of substantially equal mass (m); and

the computer (24) computes said rotation as angular acceleration $\alpha$, with said predetermined function comprising:

$$\alpha = \frac{a1 - a2}{\Delta}$$

where a1 is said first linear acceleration, a2 is said second linear acceleration and $\Delta$ is said predetermined distance.

8. The sensor (10) as in claim 1, 2 or 7, characterized in that said predetermined function further comprises integrating said angular acceleration ($\alpha$) to obtain angular velocity.

9. The sensor (10) as in any of claims 1 - 8, characterized in that the first and second linear accelerometers (14, 16) are each capable of sensing positive and negative linear acceleration.

10. The sensor (10) as in any of claims 1 - 9, characterized by a direction sensor (28) for sensing the direction of rotation of said linear axis (18).

11. The sensor (10) as in claim 10, characterized in that the direction sensor (18) comprises a magnetic compass (28).

12. A rotation sensor (40), comprising:

first and second linear accelerometers (42, 44) which are spaced from each other by a first predetermined distance ($\Delta$1) along a rotatable linear axis (18), have first and second sensing axes (46, 48) which are collinear with said linear axis (18), and sense first and second linear accelerations (a1 and a2), respectively;

third and fourth linear accelerometers (50, 52) which are spaced from each other by a second predetermined distance ($\Delta$2) parallel to said linear axis (18), have third and fourth sensing axes (54, 56) which are perpendicular to said linear axis (18), and sense third and fourth linear accelerations (a3 and a4), respectively;

first computing means (62) for computing magnitude of angular velocity $|\omega|$ of said linear axis (18) as

$$|\omega| = \sqrt{\frac{|a1 - a2|}{\Delta 1}}$$

second computing means (64) for computing angular acceleration $\alpha$ of said linear axis (18) as

$$\alpha = \frac{a3 - a4}{\Delta 2}$$

third computing means (66) for computing angular velocity $\omega'$ of said linear axis (18) as

$\omega' = \int \alpha \, dt$

and

fourth computing means (68) for computing angular velocity $\omega$ of said linear axis (18) by combining said magnitude $|\omega|$ with the sign of said angular velocity $\omega'$.

13. The sensor (40) as in claim 12, characterized in that said first and second distances ($\Delta$1 and A2) are equal.

14. The sensor (40) as in claim 13, characterized in that the first and third accelerometers (42, 50) are disposed at a first position on said linear axis (18) and the second and fourth accelerometers (44, 52) are disposed at a second position on said linear axis (18).

15. The sensor (40) as in any of claims 12 - 14, characterized in that the first, second, third and fourth accelerometers (42, 44, 50, 52) are each capable of sensing positive and negative acceleration.

FIG. 1.

FIG. 2.

FIG. 3.

FIG. 4.

FIG. 5.

FIG. 6.

FIG. 7.

FIG. 8.

FIG. 9.

FIG. 10.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X<br>Y | DE-A-41 10 374 (HITACHI LTD.)<br>* page 2, line 28 - line 44 *<br>* page 3, line 27 - line 39 *<br>* page 5, line 16 - line 36 *<br>* page 6, line 51 - page 7, line 13 *<br>* page 8, line 29 - line 35; figures<br>1-3,5-8,11-13 * | 1-7,9,10<br>12,13,15 | G01P3/44<br>G01P7/00<br>G01P15/08 |
| X<br>Y | FR-A-2 309 873 (BROWN BROTHERS & CO LTD)<br>* page 2, line 24 - page 3, line 16 *<br>* page 4, line 4 - line 34; figure 1 * | 1,2,8<br>12,13,15 | |
| A | DE-A-42 08 404 (HITACHI, LTD.)<br><br>* column 3, line 51 - column 4, line 9 *<br>* column 7, line 26 - line 60; figures 1-5<br>* | 1-3,5,7,<br>9,10 | |
| A | GB-A-2 146 776 (FERRANTI PLC)<br><br>* page 2, line 46 - page 3, line 31;<br>figures 1,2 *<br>----- | 1-4,8,<br>12-14 | TECHNICAL FIELDS<br>SEARCHED (Int.Cl.5)<br><br>G01P |

The present search report has been drawn up for all claims

| Place of search | Date of completion of the search | Examiner |
|---|---|---|
| THE HAGUE | 4 August 1994 | Hansen, P |